Europäisches Patentamt

European Patent Office

Office européen des brevets

(11) Publication number: **0 215 130**
**A1**

## EUROPEAN PATENT APPLICATION

published in accordance with Art. 158(3) EPC

(21) Application number: 86902005.7

(22) Date of filing: 07.03.86

Data of the international application taken as a basis:

(86) International application number:
**PCT/JP 86/00119**

(87) International publication number:
**WO 86/05348 (12.09.86 86/20)**

(51) Int. Cl.⁴: **H 04 N 7/18, F 41 G 3/26**

(30) Priority: 08.03.85 JP 46044/85
05.04.85 JP 721/85

(43) Date of publication of application: 25.03.87
Bulletin 87/13

(84) Designated Contracting States: CH DE FR GB IT LI

(71) Applicant: **Kuroiwa, Motoi, 27-12, Kugahara 4-chome Ohta-ku, Tokyo (JP)**

(72) Inventor: **Kuroiwa, Motoi, 27-12, Kugahara 4-chome Ohta-ku, Tokyo (JP)**

(74) Representative: **Wey, Hans-Heinrich, Dipl.-Ing. et al, Patentanwälte Müller-Börner & Wey Widenmayerstrasse 49, D-8000 München 22 (DE)**

(54) **SHOOTING MONITOR CAMERA AND APPARATUS.**

(57) A shooting monitor camera having a photographing means fixed to a barrel of a gun so that the optical axis thereof extends substantially in parallel with the axis of the barrel, and used to optically taking a scene on the optical axis, and a camera means combined with the photographing means and adapted to convert the mentioned scene into a video signal; a video means connected to the camera means wirelessly or by a wire and adapted to record and/or transmit the video signal; and a display means connected to the video means and adapted to reproduce the scene photographed by the shooting monitor camera are combined together to form a shooting monitor apparatus. If this shooting monitor apparatus is combined with a gun, such as a shotgun, a rifle and a pistol, the shooting operation of a shooter can be monitored.

1

DESCRIPTION

TITLE OF THE INVENTION
Shot Monitoring Camera and Apparatus

TECHNICAL FIELD

This invention relates to a camera and apparatus for use in combination with a gun for monitoring shooting operations, and more particularly, to a camera and apparatus for use in combination with a shot gun or the like for determining the position of a shot or the like by the shooter in clay shooting or the like.

BACKGROUND ART

In the past shooting exercise, the instructor stands by or behind the shooter to give instruction.

In shooting moving targets like clay shooting, skeet shooting, trap shooting, running boar shooting, and actual hunting, it is difficult to determine the accuracy of sighting by the shooter at the target or the horizontal or vertical deviation of the position of an actual shot from the target.

To improve his or her shooting skill, however, it is important for the shooter to well acknowledge his or her own shooting operation to acquire the best timing of triggering. If the actual sighting procedure is observable, it is very convenient for both the shooter and the instructor.

Of course, the shooter himself or herself knows more or less the manner of the movement of the gun held by him or her immediately before and at the instant of triggering. However, the shooter cannot exactly reproduce or remember the movement of the gun sight. There is the need for an apparatus which can monitor the actual movement of the gun in relation to the target and reproduce the scene on a display. Then the shooter and the instructor can visually analyze the sighting or shooting procedure on a television set to detect the shooter's shortcoming or peculiar way of shooting or sighting. I already disclosed an apparatus for judging the position of a shot relative to a flying target in clay shooting, and disclosed

an apparatus for judging the position of a shot in clay shooting wherein only an imaging lens cylinder is separated from a television camera and fixedly secured in place to a gun such that the optical axis of the imaging lens cylinder extends parallel to the axis of the gunbarrel, the remaining photoelectric element and focusing lens cylinder components of the television camera are optically coupled to the imaging lens cylinder, and the television camera is connected to a video tape recorder and a television set through an electrical cord in Japanese Patent Application No. 58-215094, and

an apparatus for judging the position of a shot in clay shooting wherein a compact television camera predominantly comprising an imaging lens cylinder and a solid-state imaging element is fixedly secured in place to a gun such that the optical axis of the imaging lens cylinder extends parallel to the axis of the gunbarrel, and the compact television camera is connected to a video tape recorder and a television set through an electrical cord in Japanese Patent Application No. 58-215095.

The apparatus of these applications have the drawback that the shooter must drag the electrical cord that connects the television camera to the video tape recorder while moving to another place. A noise generated by the dragging of the cord is also a disturbance in combining the apparatus with a system for providing communication between the shooter and the instructor.

Further, hunters often move a long distance within a short time in field hunting, and it is thus difficult to

3

radio transmit video signals from the camera means to video means located at a certain place.

## SUMMARY OF THE INVENTION

An object of the present invention is to provide a shot monitoring camera and apparatus for use in combination with a gun for monitoring shooting operations and determining the position of a shot.

Another object of the present invention is to provide a shot monitoring apparatus for use in combination with a gun for monitoring shooting operation and judging the position of a shot, particularly whether a hunting object is hit or missed.

These objects are achieved by the present invention as defined below.

Namely, the present invention provides a shot monitoring camera for monitoring the position of a shot from a gun, characterized by comprising

imaging means having an optical axis and fixedly secured to the barrel of the gun for producing an optical image of a scene on the optical axis, the optical axis extending nearly parallel to the axis of the barrel,

camera means coupled to said imaging means for converting the optical image into a video signal, and

transmitter means for radio transmitting the video signal of said camera means.

According to a second aspect of the present invention, there is provided a shot monitoring apparatus for monitoring the position of a shot from a gun, characterized by comprising

a shot monitoring camera including imaging means having an optical axis and fixedly secured to the barrel of the gun for producing an optical image of a scene on the optical axis, the optical axis extending nearly parallel to the axis of the barrel; camera means coupled to said imaging means for converting the optical image into a video signal; and transmitter means for radio transmitting the video signal of said camera means; and

video means including receiver means for receiving the video signal transmitted from said transmitter means.

According to a third aspect of the present invention, there is provided a shot monitoring apparatus for monitoring the position of a shot from a gun, characterized by comprising

a shot monitoring camera including imaging means having an optical axis and fixedly secured to the barrel of the gun for producing an optical image of a scene on the optical axis, the optical axis extending nearly parallel to the axis of the barrel; camera means coupled to said imaging means for converting the optical image into a video signal; and transmitter means for radio transmitting the video signal of said camera means;

video means including receiver means for receiving the video signal transmitted from said transmitter means; and

display means connected to said video means for reproducing the image produced by said shot monitoring camera.

According to a fourth aspect of the present invention, there is provided a shot monitoring apparatus for monitoring the position of a shot from a gun, characterized by comprising

imaging means having an optical axis and fixedly secured to the barrel of the gun for producing an optical image of a scene on the optical axis, the optical axis extending nearly parallel to the axis of the barrel,

camera means coupled to said imaging means for converting the optical image into a video signal, and

video means connected to said camera means for recording the video signal, said video means being portable so that it may be removably put on the shooter.

5

## BRIEF DESCRIPTION OF THE DRAWINGS

FIG. 1 is a schematic illustration of one embodiment of the shot monitoring camera of the present invention;

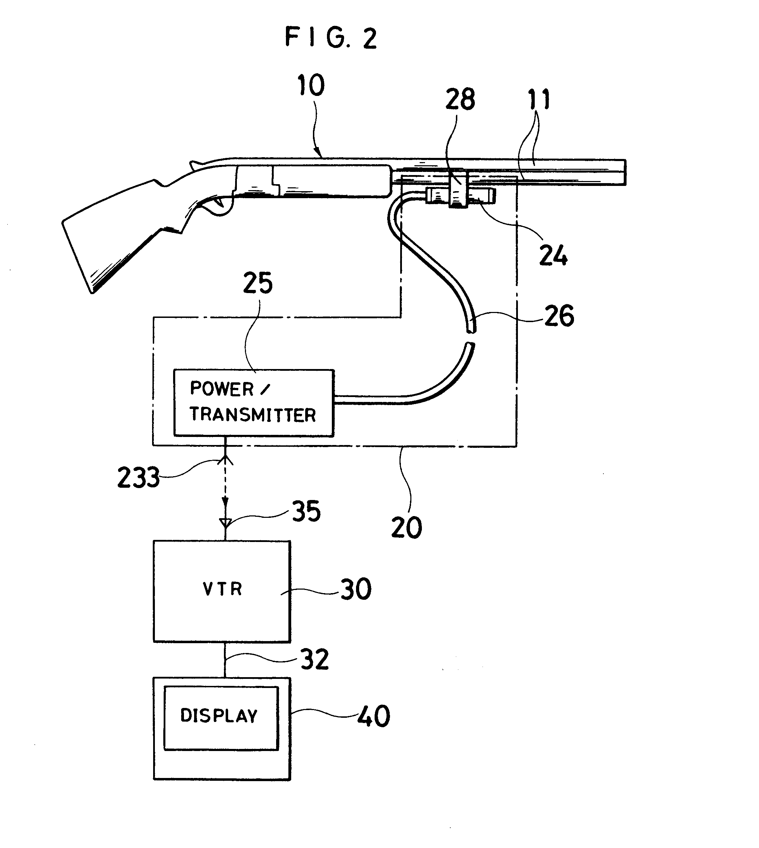

FIG. 2 is a schematic illustration of the shot monitoring apparatus of the present invention;

FIG. 3 is an enlarged view of an imaging section used in the embodiment of FIG. 1 or 2;

FIG. 4 is a block diagram of the shot monitoring camera of the present invention;

FIG. 5 is an enlarged view of another imaging section according to the present invention;

FIG. 6 is a block diagram of another embodiment of the shot monitoring camera of the present invention;

FIG. 7 is a cross-sectional view of a screen attached to a Braun tube;

FIG. 8 is a cross-sectional view of a screen built in a display unit;

FIGS. 9a to 9b are elevational views of different examples of the screen;

FIG. 10 is an elevational view of a display unit having the screen attached, an image of the target being displayed; and

FIG. 11 is a perspective view illustrating how the shooter uses the apparatus of the present invention.

FIG. 12 is a schematic view of another embodiment of the shot monitoring apparatus of the present invention;

FIG. 13 is an enlarged view of an imaging section used in the embodiment of FIG. 12;

FIG. 14 is a block diagram illustrating a shot monitoring camera section of the other embodiment of the shot monitoring apparatus of the present invention;

FIG. 15 is a perspective view illustrating how the shooter uses the other apparatus of the present invention.

Numeral 10 is a gun, 11 is a gunbarrel, 20 is a shot monitoring camera, 21 is imaging means, 211 is a lens system, 213 is lens, 215 is a lens cylinder, 217 is a filter, 219 is a fiber optic cable, 22 is camera means, 221 is a camera module, 223 is a power unit, 225 is an electrical power supply, 23 is transmitter means, 231 is a transmitter unit, 233 is an antenna, 227 is an external synchronization unit, 24 is an imaging section, 25 is a power/transmitter section, 250 is a camera/power/transmitter section, 26 is an electric cord, 28 is a fastener, 30 is video means, 40 is display means, 45 is a screen, 46 and 48 are circles, 47 is radial lines, and 50 is the shooter.

## DETAILED DESCRIPTION OF THE INVENTION

The illustrative construction of the present invention will be detailed below.

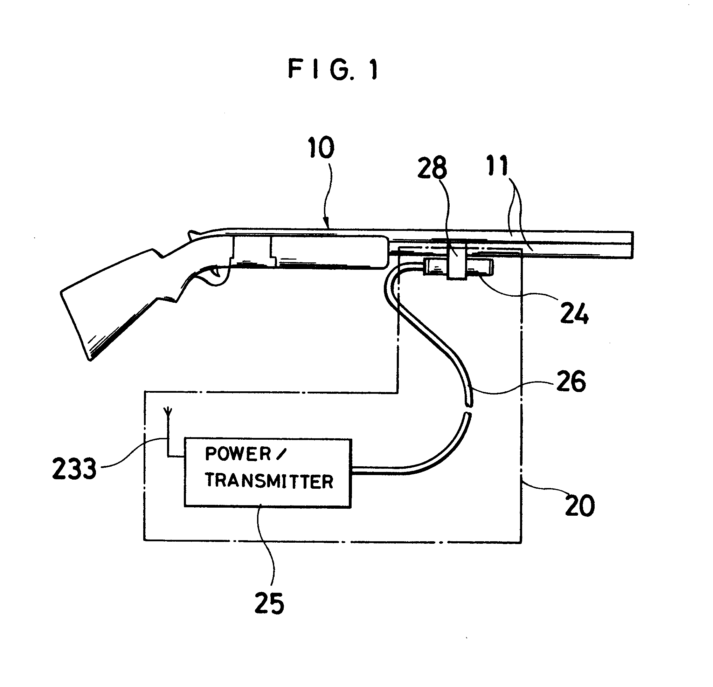

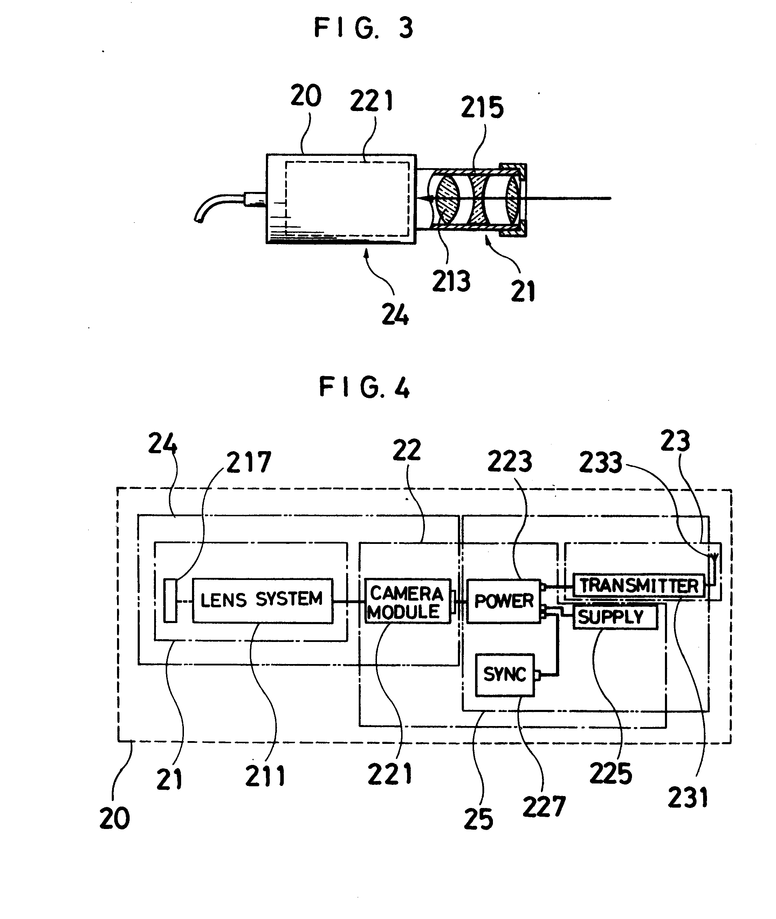

FIGS. 1 and 4 illustrate a shot monitoring camera 20 according to one preferred embodiment of the present invention. A gun 10 has a gunbarrel 11.

The shot monitoring camera 20 has an imaging section 24 which is removably secured to the gunbarrel 11 by means of a suitable fastener 28.

As shown in FIG. 4, the imaging section 24 generally comprises imaging means 21 having a lens system 211 and a camera module 221 which constitutes part of camera means 22 as will be described later. The imaging section 24 which is attached to the gun must be sufficiently compact and light weight so as not to disturb the shooting operation and is also required to be impact resistant because a high impact is applied thereto upon firing of the gun.

For this reason, the camera module 221 incorporated in the imaging section 24 may preferably be a solid-state imaging element such as CCD imaging element, MOS imaging element, and CPD imaging element rather than a conventional imaging element. A shock absorber may be interposed between the gunbarrel 11 and the imaging section 24.

The imaging section 24 includes a lens cylinder 215 extending from the front end of the imaging section 24 and having lens 213 housed therein as shown in FIG. 3. In general, the lens system 211 consisting of a plurality of lens 213 and an optionally attached filter 217 such as an ND filter constitute a part of the imaging section 24, and the imaging section 24 is secured such that the optical axis of the lens system may extend nearly parallel to the axis of the gunbarrel and optionally intersect therewith at a predetermined distance.

The lens system 211 may utilize well-known auto-iris lens or the like.

It is to be noted that since the clay shooting has a typical range of 25 to 35 m, the optical axis of the lens system may intersect with the axis of the gunbarrel at such a distance.

The imaging section 24 further includes the camera module 221 as shown in FIGS. 3 and 4. The camera module 221 generally comprises a solid-state imaging element, a known substrate module, and the like, and functions to convert an optical image on the optical axis focused by the imaging means 21 into a video signal and deliver the same.

In addition to the camera module 221 disposed in the imaging section 24, the camera means 22 used in combination with the imaging means 21 generally includes a well-known power unit 223 and an electrical power supply 225.

The power supply 225 is usually of direct current.

The power unit 223 connected to the power supply produces a predetermined power and delivers the same to the camera module 221. It also functions to conduct a video signal of the camera module 221 to a transmitter unit 231 as will be described later.

8

The power unit 223 and the power supply 225 are generally integrally assembled with the transmitter unit 231 of transmitter means 23 to form a power/transmitter section 25 as will be described later.

That is, although the shot monitoring camera 1 of the present invention comprises the imaging means 21, the camera means 22, and the transmitter means 23, it is usually regarded as having the imaging section 24 to be secured to the gunbarrel and the power/transmitter section 25 when taking into account the present way of integration of components.

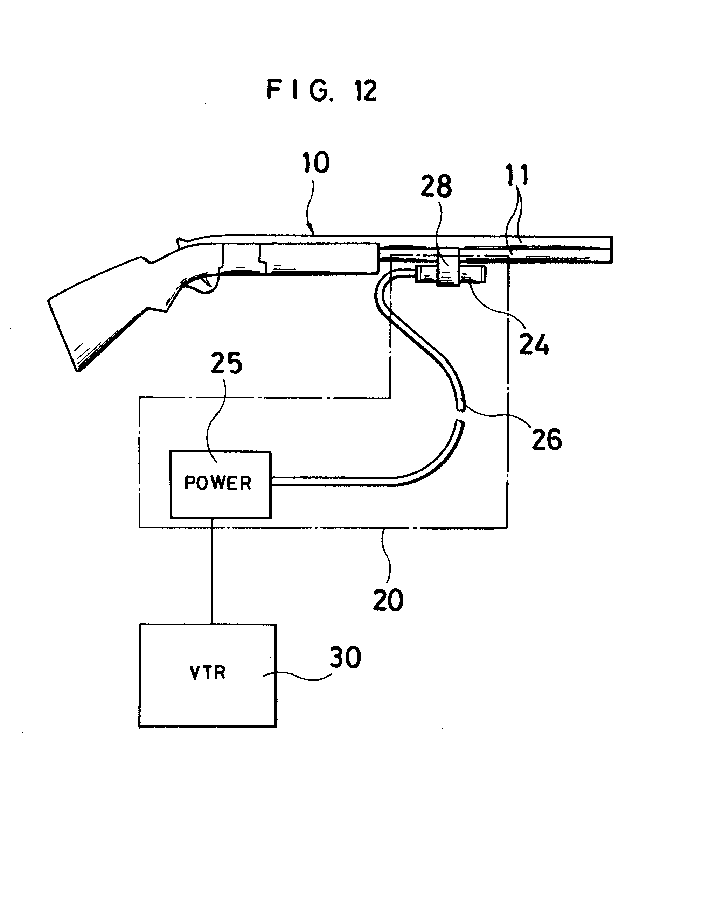

The power/transmitter section 25 forms the camera means 22 with the camera module 221 of the imaging section 24, includes the power supply 225, the power unit 223, and the transmitter unit 231, and is electrically connected to the camera module 221 of the imaging section 24 through a cable 26. Preferably, the power/transmitter section 25 is received in a chassis generally as a single unit and if desired, as divided parts, and the chassis is accommodated in a casing 27 which is put on the shoulder or waist as shown in FIG. 11.

The power/transmitter section 25 may further include a well-known external synchronization unit 227 or the like, if necessary.

The camera module 221, power unit 223, and power supply 225 form the camera means 22 as described above. As the shot monitoring camera of the present invention, a commercially available video camera unit may be used with necessary modifications.

The transmitter means 23 includes the transmitter unit 231 and the antenna 233 and functions to radio transmit the video signal. The coverage distance from the transmitter means 23 is usually within about 50 m and at the maximum about 100 m. The antenna 233 used for transmission is about

9

1 to 30 cm long and preferably has a transmission frequency of about 50 to 200 MHz.

The antenna 233 may be integrally assembled with the power/transmitter section or separately put on the shooter's cap.

A speaker or speaker-and-microphone unit may be attached to the casing 27 so that the shooter may hear the voice of the instructor who watches the display unit and gives some instruction and speak to the instructor through the speaker unit. Also preferably, the sound that the microphone catches may be transmitted as VTR voice signals from the transmitter means 23.

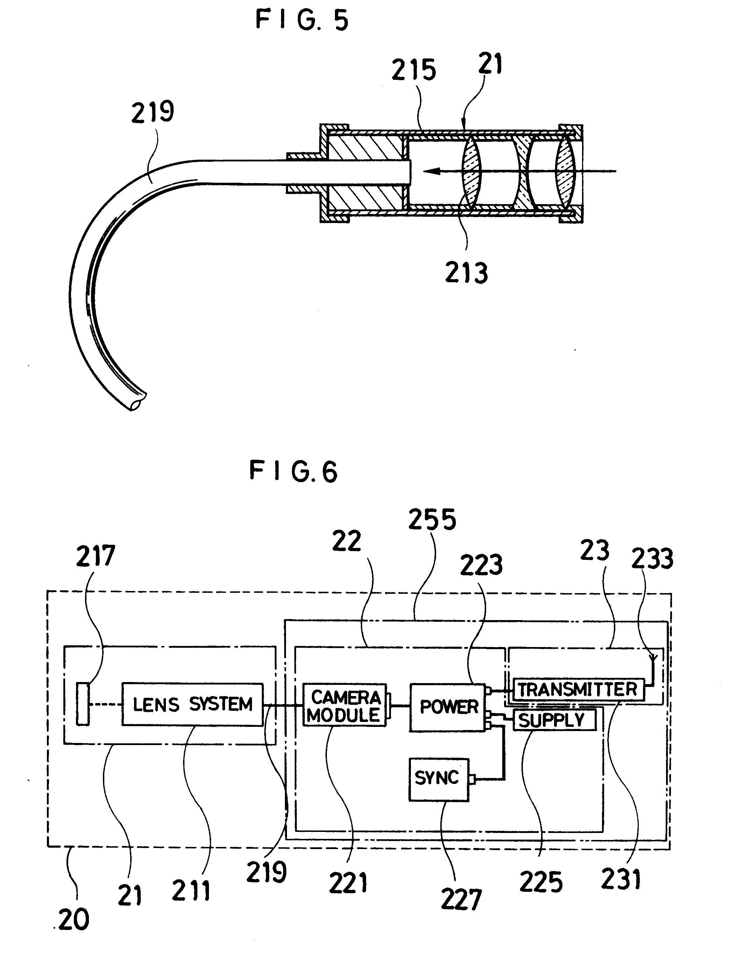

Another embodiment of the present invention is illustrated in FIGS. 5 and 6.

In this embodiment, the lens cylinder 215 of the lens system 211 housing the lens 213 is fixedly secured to the gunbarrel to serve as the imaging means 21. The camera module 221 is integrally assembled with the entirety of the above-mentioned camera means 22 having the power supply 225 and the power unit 223 and also integrally assembled with the transmitter unit 231, forming a camera/power/transmitter section 255 which is accommodated in a casing 27.

Then the imaging means 21 is coupled through a fiber optic cable 219 to the camera module 221 of the camera means 22 accommodated in the casing 27. The fiber optic cable 219 is connected such that its front end is located at the focus of the lens system, for example.

The embodiment of the shot monitoring apparatus of the present invention comprises video means 30 including receiver means for receiving the video signal transmitted from the monitoring camera 20, the video means 30 functioning to record and/or transmit the video signal, and optionally, display means 40 for reproducing the image.

The transmitted video signal is received by the receiver means composed of the antenna 35 and a well-known receiver unit and then delivered to the video means 30 in the form of a video tape recorder (VTR) or the like.

The VTR 30 is further connected to a monitoring video diplay unit 40 which receives the video signal to reproduce the image.

The video means (VTR) 30 may be a commercially available video tape recorder preferably equipped with a slow mechanism, and further with still and frame-by-frame feed mechanisms. Also preferably, it may be equipped with a microphone so that the instructor can give instruction while watching the shooting operation of the shooter. The display unit 40 may be a commercially available monitoring television unit or an ordinary television set.

The video means 30 preferably has a tuner.

In the above-illustrated embodiment of the shot monitoring apparatus, both the video means 30 and the display means 40 are used in combination with the apparatus of the present invention, but the apparatus may be used with either the video tape recorder or the display unit omitted. When the camera unit is combined with only the video tape recorder, the image taken by the camera is recorded in a video tape by means of the video tape recorder.

Next, the display means 40 used in the shot monitoring apparatus of the present invention is described in detail.

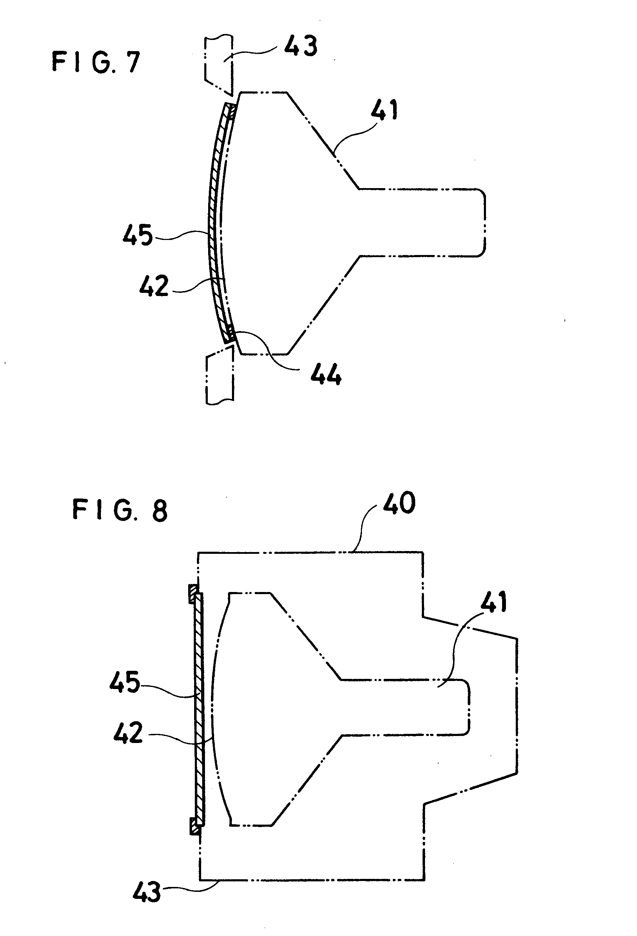

FIG. 7 illustrates a display unit comprising a conventional Braun tube 41 and a screen. The screen 45 may be affixed to the picture face 42 of the Braun tube 41 within a housing 43 as by applying adhesive to a peripheral portion thereof.

FIG. 8 illustrates another example of the display unit. The screen 45 is positioned in front of the picture face 42 of the Braun tube 41 by engagement with the housing 43 of a television set.

11

Of course, the way of attaching the screen to the display unit is not limited to these examples and any suitable attachment will occur to those skilled in the art.

The screen 45 is a rectangular transparent plate formed from synthetic resins such as acrylic resins, polyamide resins, polycarbonate resins, and celluloid as well as glass. The screen 45 may also be a flexible transparent film particularly when it is directly attached to the Braun tube face. Also employable is a screen that allows the image to appear as a three-dimensional image by utilizing light interference or the like.

The screen 45 is more preferably provided with a pattern indicative of the position of a shot from the gun.

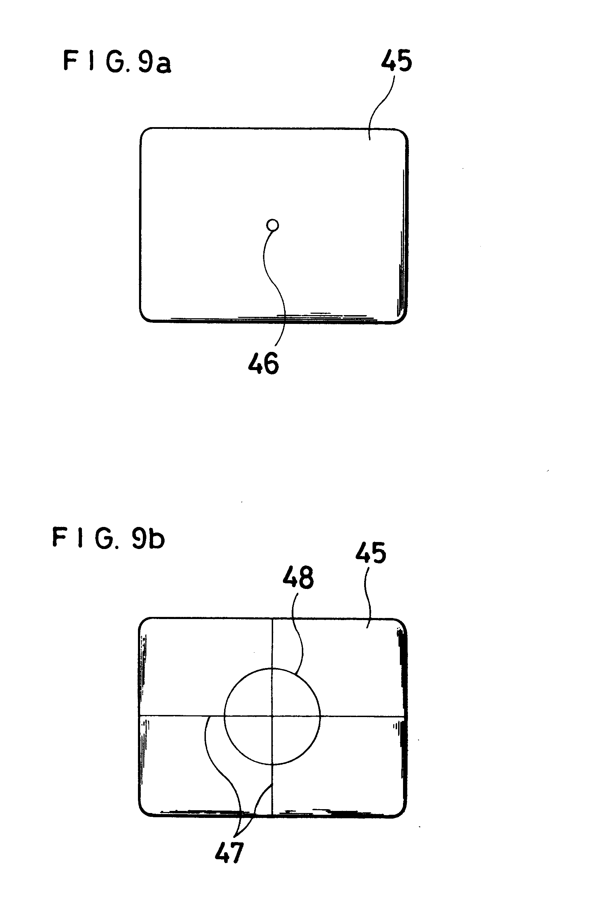

As shown in FIG. 9a, the pattern on the screen 45 may be a small circle 46 located at the center of the screen, that is, the center of the face of the Braun tube. It will be understood that this circle 46 represents a point of shot or center of sight as will be understood from the following description.

Another example of the pattern on the screen 45 is shown in FIG. 9b. FIG. 9b shows a pattern of vertical and horizontal lines 47 and a large circle 48, and the diameter of the circle 48 preferably corresponds to the diameter of the area over which shots are dispersed at the position of the target in the case of clay shooting. Of course, the screen pattern is not limited to these examples and may be provided with radial lines indicative of angles, for example. Next, the operation of the shot monitoring camera and apparatus will be described.

At the outset, the imaging section 24 is secured to the barrel 11 of the gun 10. The power/transmitter section 25 is placed in the casing 27 which is put on the waist of the shooter via a belt 51. Then switches of the imaging section 24, power/transmitter section 25, video deck 30, and monitoring display unit 40 are turned on. The shooter 50

12

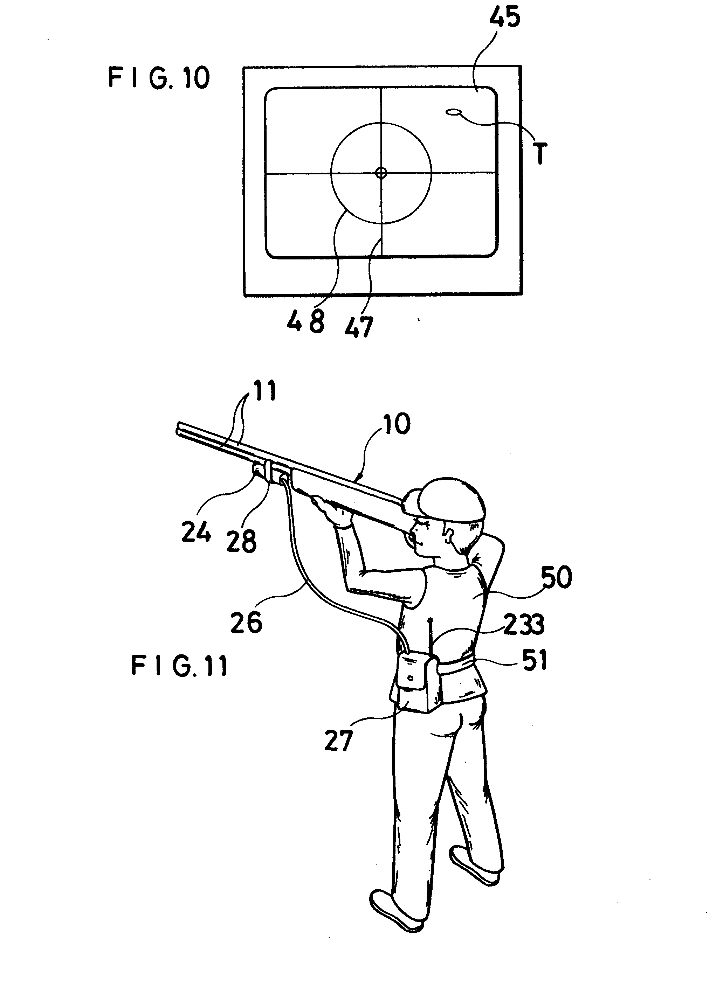

with the gun 10 in hands stands on the shooting range as shown in FIG. 11 and points the gun at a target (clay) to be thrown. At this point, the lens system 211 secured nearly parallel to the gunbarrel catches the target. An image of the target is converted into a video signal in the camera module 221, recorded in a video tape by means of the video means 30 in the form of a video tape recorder, and at the same time, displayed on the screen of the display unit of the display means 40. For example, a scene as shown in FIG. 10 is displayed on the screen wherein the center of sight C is displaced in a left lower direction with respect to the center of a target (clay) T. When the shooter triggers, the picture is moved up and down or sideways by the impact of the shot.

If the center of the target (clay) T is displaced at an upper right position.with respect to the center of the screen immediately before the wavy movement of the picture as shown in FIG. 10, then the actual shot is off the target in a lower left direction by a distance of T-C.

The instructor can monitor the shooting process on the display screen at the same time as the shooter. After making a series of shots, the shooter can review his shooting operations recorded in the video tape recorder by reproducing them. Repeatedly monitoring his own shooting operation, the shooter can determine the instant of pulling the trigger and acknowledge his own way of shooting or shortcomings.

As described above, the shot monitoring camera and apparatus of the present invention is designed such that the point of shot or center of sight of the gun is displayed at the central point of the Braun tube of a television set. An error or deviation of a shot and more particularly, the distance and direction of a shot with respect to a target can be recorded in video tape at the same time as shooting and simultaneously or subsequently displayed on the screen

13

of the display unit. After the exercise, the shooter can review his own pointing and shooting operations to find out his own way and shortcoming of shooting. It is expectable that individual shooters can outstandingly improve their shooting technique by using the present apparatus.

The shot representing screen, when used in combination with the display unit of the shot monitoring apparatus of the present invention, usually the Braun tube of a television set, is helpful in visually observing and determining the position of a shot or sight with respect to the image of a target displayed on the face of the Braun tube, ensuring accurate and easy judgment. The shooter can review his shooting operations on his home television set simply by attaching the screen on the television set and playing the recorded video tape on the video deck.

Although the present invention is described with reference to the particular embodiments, the invention is not limited thereto and may be applied to running target shooting wherein a running target is shot using a rifle rather than a shot gun. The invention is also effectively applicable to stationary targets. Although the shot monitoring camera is divided into the imaging and power/transmitter sections 24 and 25, the camera means 22 may be divided into other components, and any components other than the imaging section 24 may also be attached to the gun. Although the video tape recorder is illustrated as a typical example of the video recording means, a video disk recorder or similar equipment may also be used. A typical example of the display unit is a Braun tube, but a liquid crystal or other display unit may also be used.

FIGS. 12 to 14 illustrate a shot monitoring apparatus according to another preferred embodiment of the present invention.

14

The construction of this embodiment will be again detailed although it is approximately the same as the previous embodiment.

A gun 10 has a gunbarrel 11.

A shot monitoring camera 20 has an imaging section 24 which is removably secured to the gunbarrel 11 by means of a suitable fastener 28.

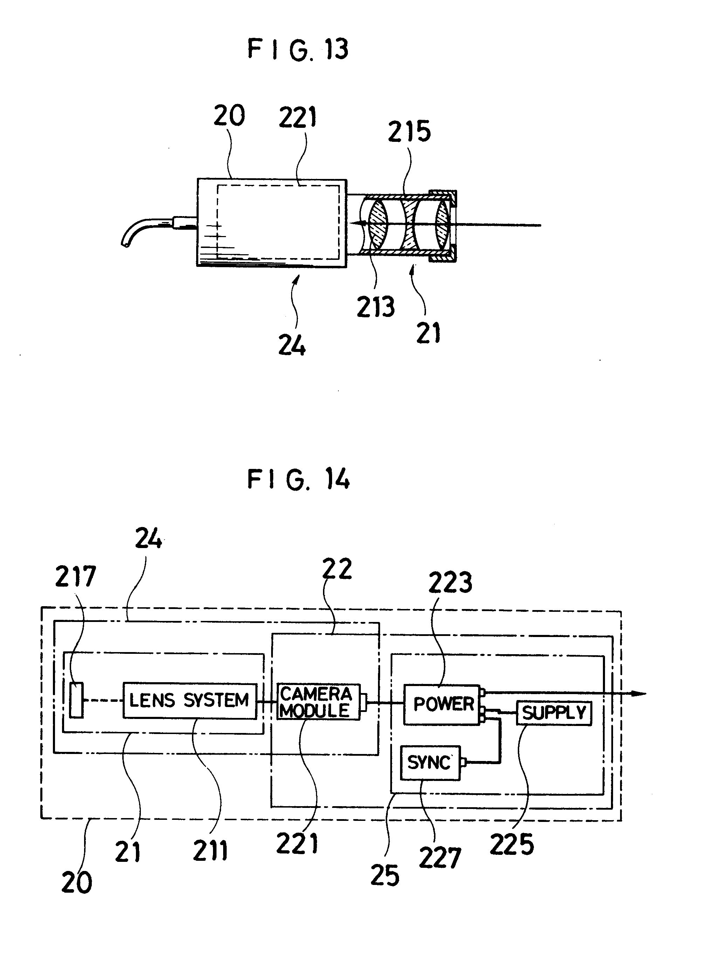

As shown in FIG. 14, the imaging section 24 generally comprises imaging means 21 having a lens system 211 and a camera module 221 which constitutes part of camera means 22 as will be described later.

The imaging section 24 which is mounted on the gun must be sufficiently compact and light weight so as not to disturb the shooting operation and is also required to be impact resistant because a great impact is applied thereto upon firing of the gun.

For this reason, the camera module 221 incorporated in the imaging section 24 may preferably be a solid-state imaging element such as CCD imaging element, MOS imaging element, and CPD imaging element. A shock absorber may be interposed between the gunbarrel 11 and the imaging section 24.

The imaging section 24 includes a lens cylinder 215 extending from the front end of the imaging section 24 and having lens 213 housed therein as shown in FIG. 13. In general, the lens system 211 consisting of a plurality of lens 213 and an optionally attached filter 217 such as an ND filter constitute a part of the imaging section 24, and the imaging section 24 is secured such that the optical axis of the lens system may extend nearly parallel to the axis of the gunbarrel and optionally intersect therewith at a predetermined distance. The lens system 211 may utilize well-known auto-iris lens or the like.

It is to be noted that since the clay shooting has a typical range of 25 to 35 m, the optical axis of the lens system may intersect with the axis of the gunbarrel at such a distance.

The imaging section 24 further includes the camera module 221 as shown in FIGS. 13 and 14. The camera module 221 generally comprises a solid-state imaging element and a known substrate module, and functions to convert an optical image on the optical axis focused by the imaging means 21 into a video signal and deliver the same.

In addition to the camera module 221 disposed in the imaging section 24, the camera means 22 used in combination with the imaging means 21 generally includes a well-known power unit 223 and an electrical power supply 225.

The power supply 225 is usually of direct current.

The power unit 223 connected to the power supply produces a predetermined power and delivers the same to the camera module 221. It also functions to conduct a video signal of the camera module 221. Besides, the power unit 223 and the power supply 225 forms a power section 25.

That is, although the shot monitoring camera 20 of the shot monitoring apparatus according to the present invention comprises the imaging means 21, the camera means 22, and the transmitter means 23, it is usually regarded as having the imaging section 24 to be secured to the gunbarrel and the power section 25 when taking into account the present way of integration of components.

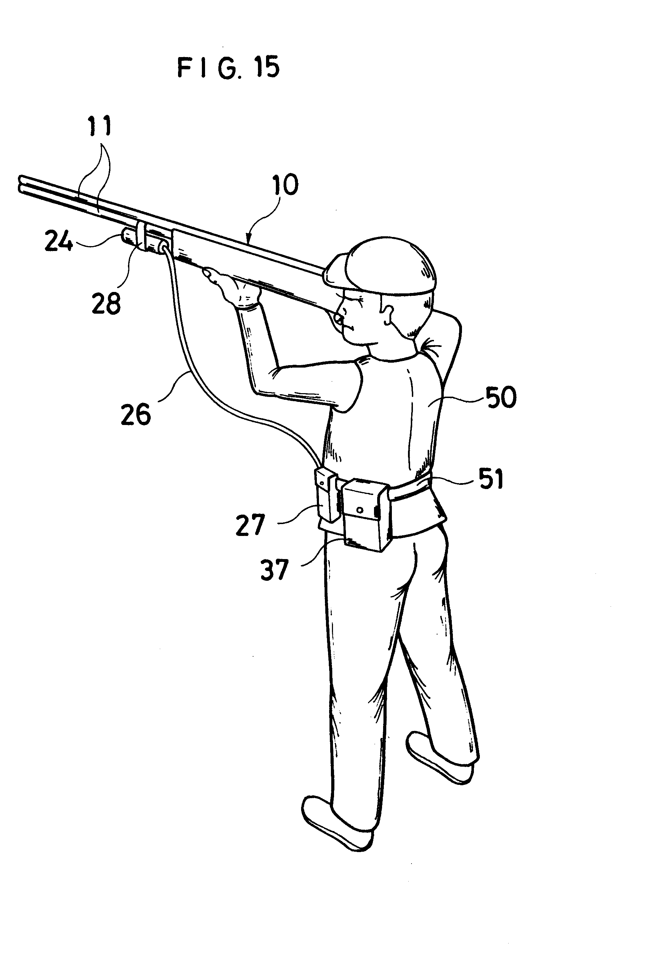

The power section 25 forms the camera means 22 with the camera module 221 of the imaging section 24, includes the power supply 225 and the power unit 223, and is electrically connected to the camera module 221 of the imaging section 24 through a cable 26. Preferably, the power section 25 is received in a chassis generally as a single unit and if desired, as divided parts, and the chassis is accommodated in a casing 27 which is put on the shoulder or waist as shown in FIG.15.

16

The power section 25 may further include a well-known external synchronization unit 227 or the like, if necessary.

The camera module 221, power unit 223, and power supply 225 form the camera means 22 as described above. As the shot monitoring camera of the present invention, a commercially available video camera unit may be used with necessary modifications.

Also, a microphone unit may preferably be attached to the casing 27 so that the sound that the microphone catches may be delivered as VTR sound signals to the video unit.

The embodiment of the shot monitoring apparatus of the present invention further comprises video means 30 electrically connected to the shot monitoring camera 20 for recording the video signal, whereby the video signal is transmitted from the shot monitoring camera 20 to the video means 30 in the form of a video tape recorder (VTR).

After recording, the VTR 30 may be connected to a monitoring video diplay unit which receives the video signal to reproduce the image.

The video means (VTR) 30 may be a commercially available video tape recorder, and more desirably a portable video tape recorder in outdoor hunting application. It is preferably equipped with a slow mechanism, and further with still and frame-by-frame feed mechanisms. The video means itself may include a reproducing display section for monitoring.

It is to be noted that the camera means 22 may be further equipped with a transmitter and an antenna for separately radio transmitting the video signal to another video means.

After hunting with images recorded by the shot monitoring apparatus of the present invention, for example, the shooter can acknowledge his own way and shortcoming of shooting to improve his skill by reproducing the recorded images on the display means having a pattern indicative of the position of a shot attached to the picture face thereof.

Also the camera module and the lens system may be connected through a fiber optic cable as in the previous embodiment.

Next, the operation of the shot monitoring camera and apparatus according to the third embodiment will be described. At the outset, the imaging section 24 is secured to the barrel 11 of the gun 10. The power section 25 and the video deck 30 are placed in the casings 27 and 37, respectively, which may be put on the waist of the shooter via a belt 51, or hung from the shoulder or carried on the back with the aid of suitable straps. Alternatively, they may be integrally assembled and placed in a single casing which is put on the shooter.

Then switches of the imaging section 24, power section 25, and video deck 30 are turned on. The shooter 50 holds the gun 10 at the ready as shown in FIG. 15 and points the gun at a moving target (or clay). At this point, the lens system 211 secured nearly parallel to the gunbarrel catches the target. An image of the target is converted into a video signal in the camera module 221 and recorded in a video tape by means of the video means 30 in the form of a video tape recorder.

The shooter can review his shooting operations by carrying the apparatus back home and playing the recorded video tape on a display unit in the form of a television set. Repeatedly monitoring his own shooting operation, the shooter can determine the instant of pulling the trigger and acknowledge his own way of shooting or shortcomings.

As described above, the shot monitoring apparatus of the present invention is designed to record shooting operation in video tape such that the point of shot or center of sight of the gun is displayed at the central point of the Braun tube of a television set. An error or deviation of a shot and more particularly, the distance and direction of a shot with respect to a hunting target can be recorded in video tape at the same time as shooting and subsequently reproduced on the screen of the display unit. The shooter can later review his own pointing and shooting operations to see his own way and shortcoming of shooting. It is expectable that individual shooters can outstandingly improve their shooting skill by using the present apparatus.

Although the present invention is described with reference to the particular embodiments, the invention is not limited thereto and may be applied to the use of shot guns in hunting of small animals and clay shooting, and the use of rifles in hunting of large animals like bears and wild boars, running target shooting wherein a running target is shot, and shooting of a stationary target as well as the use of light beam guns, laser guns, and guns from which no actual bullet or light ray emerges.

Although the shot monitoring camera is divided into the imaging and power sections 24 and 25, the camera means 22 may be divided into other components, and any components other than the imaging section 24 may also be mounted on the gun. Although the video tape recorder is illustrated as a typical example of the video recording means, a video disk recorder, 8-mm video camera or similar equipment may also be used.

INDUSTRIAL APPLICABILITY

The shot monitoring camera and apparatus of the present invention is very helpful for the shooter to see his own shortcomings to improve his shooting skill and for the instructor to give an adequate advice to the shooter.

In the clay or similar shooting, the shooter often moves to another place after shooting at one place. A prior art apparatus having a cord for connection has the drawback that the cord is a drag. There also arises the drawback

19

that a rumbling noise is generated during movement of the shooter particularly when a speaker, a microphone, or a speaker and microphone unit is attached for communication of instructions and answers between the instructor and the shooter.

The shot monitoring camera and apparatus of the present invention can overcome the above-mentioned drawbacks by newly adding a radio transmission function. The instructor need not stand near the shooter to give instruction and can now give instruction at a distant place. Using a plurality of frequencies, the instructor can give instruction to a plurality of shooters while watching one or a plurality of display means at a time.

The embodiments of the shot monitoring camera and apparatus of the present invention are more impact resistant and successful in reducing the weight of the gun as compared with the apparatus of Japanese Patent Application No. 58-215095 because the power section is separated from the imaging section rather than being combined with the imaging section to mount on the gun together.

The embodiment of the shot monitoring apparatus according to the fourth aspect of the present invention does not include a television set as an essential component unlike Japanese Patent Application Nos. 58-215094 and 58-215095. Thus the apparatus is portable with the television set disconnected.

The embodiment thereof is more impact resistant and successful in reducing the weight of the gun as compared with the apparatus of Japanese Patent Application No. 58-215095 because the power section is separated from the imaging section rather than being combined with the imaging section to mount on the gun together.

Since hunters often move a long distance within a short time in field hunting, it is difficult to radio transmit video signals from the camera means. The shot

20

monitoring apparatus according to the third aspect of the present invention is very advantageous in such situation.

21

CLAIMS

1.    A shot monitoring camera for monitoring the position of a shot from a gun, characterized by comprising

imaging means having an optical axis and fixedly secured to the barrel of the gun for producing an optical image of a scene on the optical axis, the optical axis extending nearly parallel to the axis of the barrel,

camera means coupled to said imaging means for converting the optical image into a video signal, and

transmitter means for radio transmitting the video signal of said camera means.

2.    A shot monitoring camera as set forth in claim 1 wherein

the imagning means includes a lens system,

the camera means includes a camera module having an imaging element for producing the video signal, an electrical power supply, and a power unit for receiving said video signal and supplying an electrical power from said power supply to said camera module, and

the transmitter means includes a transmitter unit and an antenna.

3.    A shot monitoring camera as set forth in claim 2 wherein the lens system and the camera module are integrally assembled to form an imaging section which is fixedly secured to the gunbarrel, and

the power supply, the power unit, and the transmitter unit are integrally assembled to form a power/transmitter section, wherein the imaging section and the power/transmitter section are electrically connected.

22

4. A shot monitoring camera as set forth in claim 3 wherein the imaging section is adapted to be removably secured to the gunbarrel by means of a fastener.

5. A shot monitoring camera as set forth in claim 3 wherein said power/transmitter section is accommodated in a casing such that the casing may be removably put on by the shooter.

6. A shot monitoring camera as set forth in any one of claims 3 to 5 wherein the antenna is attached to the power/transimitter section.

7. A shot monitoring camera as set forth in claim 2 wherein the lens system is fixedly secured to the gunbarrel, and the camera module, the power supply, the power unit, and the transmitter unit are integrally assembled to form a camera/power/transmitter section, wherein said lens system and said camera module are optically connected by a fiber optic cable.

8. A shot monitoring camera as set forth in claim 7 wherein the lens system is adapted to be removably secured to the gunbarrel by means of a fastener.

9. A shot monitoring camera as set forth in claim 7 wherein said camera/power/transmitter section is accommodated in a casing such that the casing may be removably put on by the shooter.

10. A shot monitoring camera as set forth in any one of claims 7 to 9 wherein the antenna is attached to the power/transimitter section.

11. A shot monitoring camera as set forth in any one of claims 3 to 10 wherein the antenna is adapted to be put on the shooter.

12. A shot monitoring apparatus for monitoring the position of a shot from a gun, characterized by comprising

a shot monitoring camera including imaging means having an optical axis and fixedly secured to the barrel of the gun for producing an optical image of a scene on the optical axis, the optical axis extending nearly parallel to the axis of the barrel; camera means coupled to said imaging means for converting the optical image into a video signal; and transmitter means for radio transmitting the video signal of said camera means; and

video means including receiver means for receiving the video signal transmitted from said transmitter means.

13. A shot monitoring apparatus for monitoring the position of a shot from a gun, characterized by comprising

a shot monitoring camera including imaging means having an optical axis and fixedly secured to the barrel of the gun for producing an optical image of a scene on the optical axis, the optical axis extending nearly parallel to the axis of the barrel; camera means coupled to said imaging means for converting the optical image into a video signal; and transmitter means for radio transmitting the video signal of said camera means;

video means including receiver means for receiving the video signal transmitted from said transmitter means; and

display means connected to said video means for reproducing the image produced by said shot monitoring camera.

24

14. A shot monitoring apparatus as set forth in claim 13 wherein said display means includes a Braun tube and a transparent screen having a pattern indicating at least the center of the face of the Braun tube.

15. A shot monitoring apparatus for monitoring the position of a shot from a gun, characterized by comprising
imaging means having an optical axis and fixedly secured to the barrel of the gun for producing an optical image of a scene on the optical axis, the optical axis extending nearly parallel to the axis of the barrel,
camera means coupled to said imaging means for converting the optical image into a video signal, and
video means connected to said camera means for recording the video signal, said video means being portable so that it may be removably put on the shooter.

F I G. 1

F I G. 2

POWER /
TRANSMITTER

V T R

DISPLAY

FIG. 3

FIG. 4

FIG. 5

FIG. 6

FIG. 7

43
41
45
42
44

FIG. 8

40
41
45
42
43

F I G. 9a

45

46

F I G. 9b

48

45

47

F I G. 10

45

T

4 8    47

11

10

24  28

50

26

233

51

27

F I G. 11

F I G. 12

0215130

## F I G. 13

## F I G. 14

LENS SYSTEM

CAMERA MODULE

POWER

SUPPLY

SYNC

F I G. 15

# INTERNATIONAL SEARCH REPORT 0215130

International Application No. PCT/JP86/00119

## I. CLASSIFICATION OF SUBJECT MATTER (if several classification symbols apply, indicate all) ³

According to International Patent Classification (IPC) or to both National Classification and IPC

Int.Cl$^4$  H04N7/18, F41G3/26

## II. FIELDS SEARCHED

### Minimum Documentation Searched ⁴

| Classification System | Classification Symbols |
|---|---|
| IPC | H04N7/18 <br> F41G3/26 <br> H04N5/38 |

### Documentation Searched other than Minimum Documentation to the Extent that such Documents are included in the Fields Searched ⁵

| | |
|---|---|
| Jitsuyo Shinan Koho | 1926 – 1985 |
| Kokai Jitsuyo Shinan Koho | 1971 – 1985 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| Y | JP, A, 52-101899 (Shadan Hojin Nippon Rifle Shageki Kyokai) <br> 26 August 1977 (26. 08. 77) <br> (Family: none) | 1 – 15 |
| Y | JP, A, 52-97300 (Shadan Hojin Nippon Rifle Shageki Kyokai) <br> 15 August 1977 (15. 08. 77) <br> (Family: none) | 1 – 15 |
| Y | JP, A, 49-14027 (Nippon Hoso Kyokai) <br> 7 February 1974 (07. 02. 74) <br> (Family: none) | 1 – 15 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| May 27, 1986 (27. 05. 86) | June 16, 1986 (16. 06. 86) |

| International Searching Authority ¹ | Signature of Authorized Officer ²⁰ |
|---|---|
| Japanese Patent Office | |

Form PCT/ISA/210 (second sheet) (October 1981)